(19) Europäisches Patentamt
European Patent Office
Office européen des brevets

(11) **EP 2 767 653 B1**

(12) **EUROPEAN PATENT SPECIFICATION**

(45) Date of publication and mention
of the grant of the patent:
**22.01.2020 Bulletin 2020/04**

(51) Int Cl.:
*E04B 1/98* (2006.01)    *E04H 9/02* (2006.01)
*G05D 19/02* (2006.01)

(21) Application number: **14153885.0**

(22) Date of filing: **04.02.2014**

(54) **Higher-order vibration control device and method**

Schwingungssteuerungsvorrichtung höherer Ordnung und Verfahren

Dispositif de commande de vibrations d'ordre supérieur et méthode

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.02.2013 JP 2013026347**

(43) Date of publication of application:
**20.08.2014 Bulletin 2014/34**

(73) Proprietor: **Hitachi-GE Nuclear Energy, Ltd.**
**Hitachi-shi**
**Ibaraki 317-0073 (JP)**

(72) Inventors:
• **Miyajima, Ayumu**
**Tokyo, 100-8280 (JP)**
• **Ishigaki, Hirokuni**
**Ibaraki, 317-0073 (JP)**
• **Onitsuka, Shohei**
**Ibaraki, 317-0073 (JP)**
• **Tanaka, Hidenori**
**Ibaraki, 317-0073 (JP)**

(74) Representative: **MERH-IP Matias Erny Reichl Hoffmann**
**Patentanwälte PartG mbB**
**Paul-Heyse-Strasse 29**
**80336 München (DE)**

(56) References cited:
**EP-A1- 0 587 891      EP-A1- 0 838 556**
**JP-A- 2003 240 047    JP-A- 2004 293 669**
**JP-A- 2007 297 854    JP-A- 2009 155 801**

**Description**

BACKGROUND OF THE INVENTION

1. Field of the Invention

The present invention relates to a higher-order vibration control device according to the preamble of claim 1, a large-scale construction according to the preamble of claim 6 and a higher-order vibration control method for a large-scale construction according to claim 11.

2. Description of the Related Art

One of the publications which discloses the background art relating to the present invention is JP-2007-297854-A. This publication describes that "an architectural construction includes a building roof which can be protected from a flying object and which is constructed from reinforced concrete or steel plate concrete; a building main body constructed below the building roof; and a vibration control device having laminated rubber and a vibration-suppression damper. The laminated rubber is installed between the building roof and the building main body. The vibration-suppression damper connects the building roof with the building main body and uses viscous-body flowing resistive force."

Another publication that discloses the background art relating to the present invention is JP-2003-240047-A. This publication describes "an impact damper attached to a construction, the impact damper being characterized in that a tube is formed in a J-shape, a central plate is mounted to a lower end of the tube, a shock absorber is applied to the interior surface of the central plate, an end plate is mounted to an upper end of the tube, and a weight is insertably provided in the tube so as to be movable along the tube."

In EP 0 587 891 A1 a vibration control device for a structure is described. The vibration control device constitutes a double action vibration absorber of positive control type having a structure made of concrete or steel and having a room therein placed on a top portion of a building via a support comprising a plurality of high damping laminated rubber members.

In JP 2009 155801 A a damping mechanism for a layer of a building having a multilayer structure is described. The damping structure is capable of obtaining a reduced response effect for the entire building. Further, a rotational inertial mass damper and an additional spring and a damping mechanism are provided and are connected in series.

In JP 2004 293669 A a vibration control system comprising a rotation shaft of a heavy bob, a reducer mounted to the rotation shaft and a rotating body connected to an end of the rotation shaft are described.

SUMMARY OF THE INVENTION

When a nuclear plant is to be built, it is necessary to expect the impact of a flying object to the nuclear plant may occur in some specific countries or regions even if the possibility of such an impact is very low. An aircraft such as a combat aircraft or a large-size civil aircraft is expected as the flying object. Depending on the size and impact velocity of the aircraft, higher-order vibration (e.g. vibration of 10 Hz or more; period being 0.1 sec or below) is likely to propagate which has an influence on the maintenance of the functions of devices (e.g. housed inside the reactor containment vessel wall) inside the nuclear plant.

However, the conventional technologies including above-mentioned two publications do not necessarily pay sufficient attention to the control of the higher-order vibration resulting from an impact load such as an aircraft impact.

It is known that the earthquake protection for the nuclear plant is set based on the damping (structural damping) of the building per se and such structural damping is effective for an earthquake (e.g. document: Shibata, Akinori, The latest earthquake-resistant structure analysis, (2nd edition), Japan, Morikita Publishing Co., Ltd. May 15, 2003, Pages 45-50). However, should the aircraft impact occur, an impact load is locally applied to a portion of the building in a short period of time; therefore, the use of the structural damping alone does not necessarily produce a sufficient effect of dissipating vibration energy. In addition, reinforcing the overall building so as to be able to withstand an aircraft impact will increase the mass of the nuclear plant, leading to the concern about an increase in cost.

It is an object of the present invention to provide a higher-order vibration control device capable of controlling higher-order vibration occurring when an impact load resulting from an aircraft impact or the like is applied to a large-scale construction such as a nuclear plant.

In accordance with the present invention, there is provided a higher-order vibration control device having the features of claim 1, a large-scale construction having the features of claim 6 and a higher-order vibration control method for a large-scale construction having the features of claim 11.

The present invention can control the higher-order vibration occurring when an impact load resulting from an aircraft impact or the like is applied to the large-scale construction.

## BRIEF DESCRIPTION OF THE DRAWINGS

Fig. 1 is an overall view of a higher-order vibration control device according to a first embodiment of the present invention.

Fig. 2 is a schematic view of a nuclear reactor building 3 in which the higher-order vibration control device 1 shown in Fig. 1 is disposed.

Figs. 3A, 3B and 3C illustrate the action of the higher-order vibration control device shown in Fig. 1.

Fig. 4 is a graph illustrating the trial calculation of acceleration response spectra with respect to an aircraft impact and an earthquake using a multi-mass point system simplified model of a conventional nuclear plant.

Fig. 5 illustrates an equivalent model of a dynamic damper of the higher-order vibration control device shown in Fig. 1.

Fig. 6 illustrates non-linear characteristics of the dynamic damper of the higher-order vibration control device illustrated in Fig. 1.

Fig. 7 illustrates one example of impact load curves of an aircraft.

Fig. 8 shows an analysis result of acceleration encountered when the impact load F_shock in Fig. 7 is applied to a primary vibration system 6 to operate the dynamic damper 5 in the system shown in Fig. 5.

Fig. 9 shows an analysis result of acceleration encountered when the impact load F_shock in Fig. 7 is applied to a primary vibration system, in a conventional system not provided with the higher-order vibration control device according to the present invention.

Fig. 10 shows a comparison in acceleration response spectrum between the absence and presence of the dynamic damper according to the first embodiment of the present invention.

Figs. 11A and 11B illustrate the schematic configuration and action of a higher-order vibration control device according to a second embodiment of the present invention.

Figs. 12A and 12B illustrate the schematic configuration and action of a higher-order vibration control device according to a third embodiment of the present invention.

Figs. 13A and 13B illustrate the schematic configuration and action of a higher-order vibration control device according to a fourth embodiment of the present invention.

Fig. 14 is a schematic view of a nuclear reactor building 3 in which the higher-order vibration control device 1B shown in Fig. 1 is disposed.

## DESCRIPTION OF THE PREFERRED EMBODIMENTS

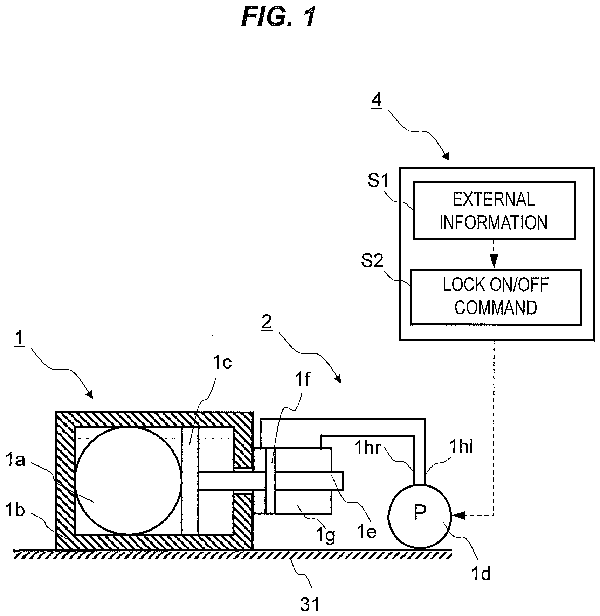

Preferred embodiments of the present invention will hereinafter be described with reference to the drawings. A first embodiment of the present invention is first described with reference to Figs. 1 through 10.

Fig. 1 is an overall view of a higher-order vibration control device according to the first embodiment of the present invention. The higher-order vibration control device 1 shown in Fig. 1 includes a housing 1b, an impactor 1a, a locking mechanism 2, and a control unit 4, which constitute an impact damper. The housing 1b is nearly horizontally secured to a floor portion (a floor slab) 31 of a nuclear plant, which is a large-scale construction. The impactor 1a is housed in the housing 1b so as to be movable in a substantially horizontal direction. The locking mechanism 2 can selectively switch between the release (lock-OFF) and restraint (lock-ON) of the displacement of the impactor 1a in the housing 1b. The control unit 4 controls the switching between ON and OFF of the locking of the impactor 1a through the locking mechanism 2 on the basis of external information.

The impactor (the impact body) 1a shown in Fig. 1 is formed roughly spherical. The housing 1b internally has such a roughly cylindrical hollow portion as to conform to the outer shape (spherical) of the impactor 1a. The outer shape of the housing 1b is a roughly cylindrical shape. Incidentally, in the illustrated example, the housing 1b is internally shaped into a cylinder in view of largely ensuring a contact portion with the impactor 1a. However, the internal shape of the impactor 1b is not limited to this but needs only to have such a shape as to be able to contact the impactor 1a. For example, the internal shape of the impactor 1a may be formed into a rectangular parallelepiped.

The locking mechanism 2 includes a hydraulic pump 1d, a hydraulic cylinder 1g and a reaction plate 1c. The hydraulic cylinder 1g has a rod 1e and a piston If attached to the rod 1e and slid in the cylinder 1g. Hydraulic oil supplied from the hydraulic pump 1d is allowed to flow into hydraulic chambers provided on both sides of the piston If in the cylinder 1g via a pair of pipes (a pipe (R) 1hr and a pipe (L) 1hl). In this way, the rod 1e reciprocates in the axial direction of the housing 1b. The rod 1e has a leading end which is inserted into the housing 1b via a hole bored in the axial end face of the housing 1b. The reaction plate 1c is attached to the leading end of the rod 1e. The reaction plate 1c is a circular plate housed in the housing 1b. The rod 1e reciprocates, thereby the reaction plate 1c moves toward or retreated from the impactor 1a.

The control unit 4 sends a signal (a locking ON/OFF command S2) to the hydraulic pump 1d on the basis of the external information S1 such as aircraft impact prediction information, earthquake information, etc., thereby switching ON/OFF of the locking mechanism 2. The hydraulic pump 1d is operated to supply hydraulic oil to the hydraulic cylinder 1g via the pipe (R) 1hr upon receipt of the ON command from the control unit 4 and to the hydraulic cylinder 1g via the pipe (L) 1hl upon receipt of the OFF command.

Incidentally, although particularly not described with an illustration, the control unit 4 has the same hardware configuration as that of a computer. For example, the control unit 4 includes an arithmetic processing unit (e.g. a CPU) as calculation means for implementing various programs, storage units (e.g. semiconductor memories such as ROM, RAM and a flash memory, or a magnetic storage unit such as a hard disk) as storage means for storing various data including the programs, and an input-output arithmetic processing unit for exercising control for inputting and outputting data, commands, etc. to and from each unit.

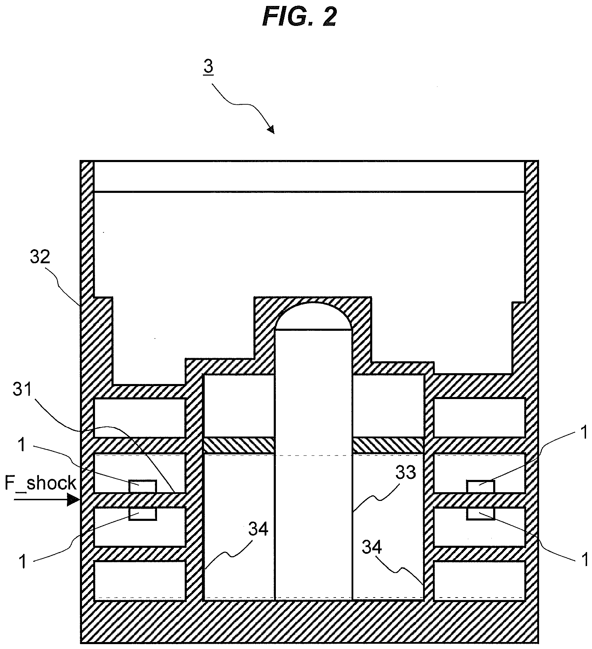

Fig. 2 is a schematic view of a nuclear reactor building 3 in a nuclear plant, the higher-order vibration control devices 1 shown in Fig. 1 being disposed in the nuclear reactor building 3. Incidentally, the same portions as in Fig. 1 are attached with like reference numerals and their explanations are omitted. The same holds true for the following figures.

The nuclear reactor building 3 includes an external wall 32, a reactor containment vessel wall 34 and a reactor pressure vessel 33. The reactor containment vessel wall 34 is a roughly cylindrical (bell-shaped) wall and constitutes a reactor containment vessel in which the reactor pressure vessel 33 is housed. In this case, a flying object may impact the external wall 32 to apply a transverse (horizontal) impact load F_shock (indicated with an arrow in the figure) to the nuclear reactor building 3. Based on this assumption, the higher-order vibration control devices 1 are mounted on the upper surface of a floor slab 31 and lower surface of a floor slab 31 (e.g. a ceiling) spanned between the external wall 32 and the reactor containment vessel wall 34. It is effective that a plurality of the higher-order vibration control devices 1 are mounted as illustrated in Fig. 2. However, it is preferred that the number of the higher-order vibration control devices 1 thus installed be set taking into account conditions such as the weight and impact velocity of a flying object assumed, the position of an impact floor, etc. Incidentally, Fig. 2 exemplifies the case where the higher-order vibration control devices 1 are mounted on the upper surface and lower surface of the floor slab 31. However, the higher-order vibration control devices 1 may be installed on wall surfaces in the nuclear reactor building 3 while being held in the same posture as above (i.e., the housing 1b is in the horizontal state).

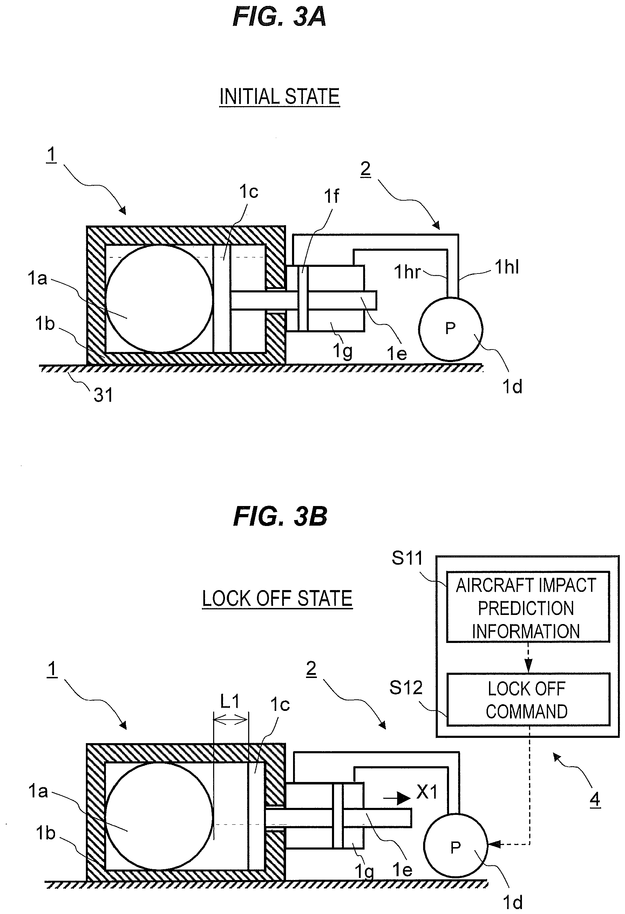

Figs. 3A to 3C illustrate the action of the higher-order vibration control device shown in Fig. 1. Fig. 3A illustrates an initial state of the higher-order vibration control device. In this case, the control unit 4 sends an ON command to the hydraulic pump 1d, so that hydraulic oil is supplied to the pipe (R) 1hr. Thus, the cylinder 1e is extended to bring the reaction plate 1c into contact with the impactor 1a. The impactor 1a is held in the state of being sandwiched between the internal wall of the housing 1b and the reaction plate 1c. In other words, the rolling of the impactor 1a is locked by the locking mechanism 2.

As illustrated in Fig. 3B, if it is determined that it is possible for an aircraft as a flying object to impact the nuclear reactor building 3 on the basis of the aircraft impact prediction information S11, the control unit 4 sends the OFF command S12 to the hydraulic pump 1d. Thus, the hydraulic pump 1d operates to supply the hydraulic oil to the pipe (L) 1hl to shift the piston If, the rod 1e and the reaction plate 1c in the direction of arrow X1 (rightward in Fig. 3B). This releases the locking of the impactor 1a, which brings the impactor 1a into a state of being able to be rolled. Incidentally, the aircraft impact prediction information S11 can be obtained by confirming the absence or presence of the aircraft which is approaching the nuclear reactor building 3 by means of a radar.

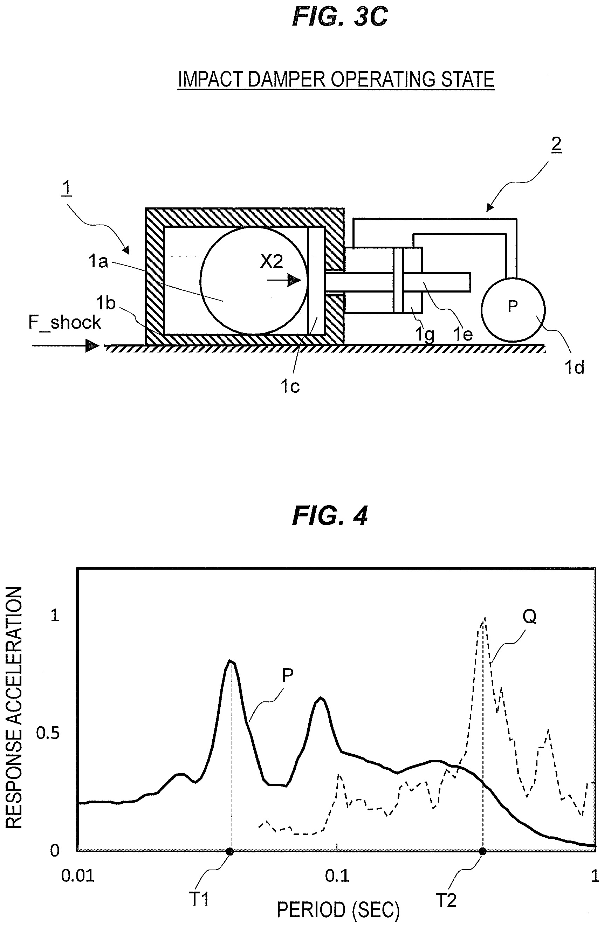

If the aircraft impacts the nuclear reactor building 3 to apply an impact load F_shock thereto, the impactor 1a is rolled in the direction of arrow X2 as shown in Fig. 3C and impacts the reaction plate 1c, thereby damping vibration energy.

Fig. 4 is a graph illustrating the results of the trial calculation of acceleration response spectra with respect to an aircraft impact and an earthquake using a multi-mass point system simplified model of a conventional nuclear plant. In this graph, a solid line P represents a response to an aircraft impact and a dotted line Q represents a response to an earthquake. In the graph, a horizontal axis represents the period of vibration and a longitudinal axis represents a value obtained by making response acceleration dimensionless with the maximum value set at 1. These results show that the acceleration response caused by an aircraft impact lies in a relatively short period band (a higher-order vibration band) than that caused by the earthquake and a peak period (at T1 in Fig. 4) is shorter than 0.1 sec. On the other hand, the acceleration response caused by an earthquake lies in a relatively longer band (a lower-order vibration band) than that caused by the aircraft impact and a peak period (at T2 in Fig. 4) is longer than 0.1 sec. Thus, to reduce the higher-order vibration caused by the aircraft impact, the impact damper needs only to be tuned focusing on the higher-order vibration.

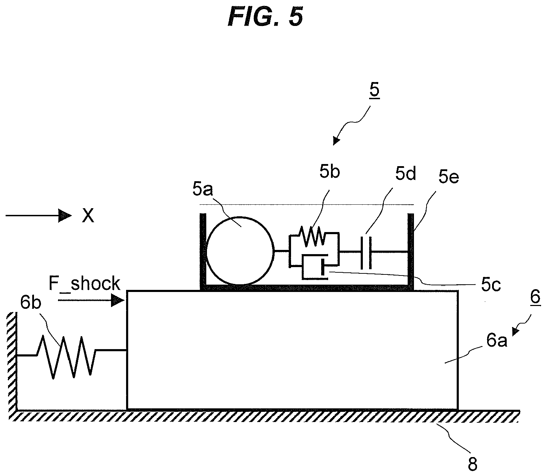

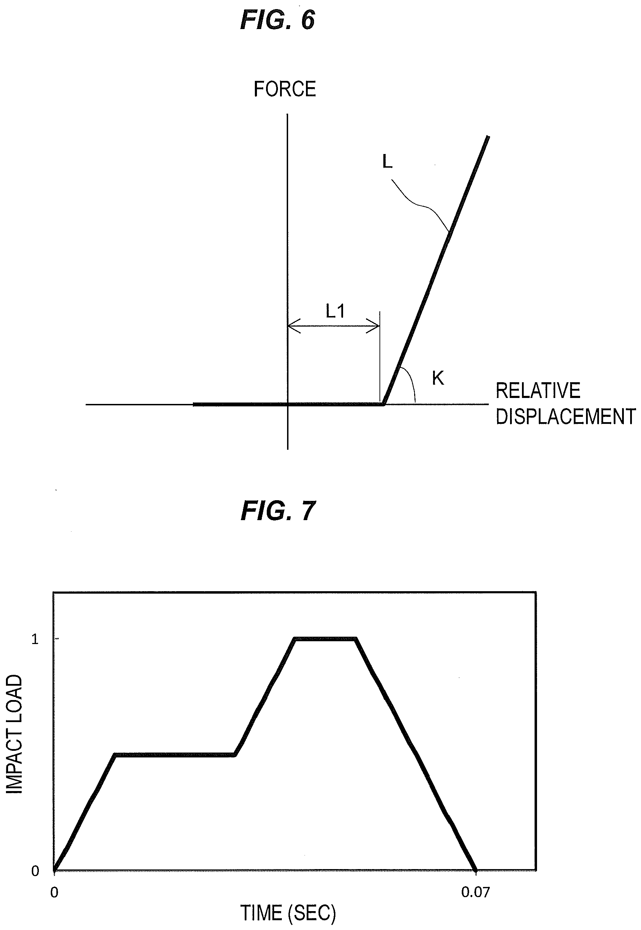

A method of tuning the impact damper is next described with reference to Figs. 5 and 6. Fig. 5 illustrates an equivalent model of the dynamic damper of the higher-order vibration control device shown in Fig. 1. In Fig. 5, a weight 5a corresponds to the impactor 1a in Fig. 1 and a reaction plate 5e corresponds to the reaction plate 1c in Fig. 1. If elastic deformation is assumed with respect to the contact between the weight 5a and the reaction plate 5e (i.e., the contact between the impactor 1a and the reaction place 1c), the weight 5a and the reaction plate 5e can represent a dynamic mode in which they are connected to each other via a spring element 5b, a damping element 5c and a gap element 5d. Here, the spring element 5b represents contact rigidity, the damping element 5c represents contact damping equivalent to a reaction coefficient, and the gap element 5d represents the gap between the weight 5a and the reaction plate 5e.

The gap element 5d has non-linear characteristics as shown in Fig. 6. In Fig. 6, a horizontal axis represents an X-directional relative displacement between the weight 5a and the reaction plate 5e and a vertical axis represents the force caused by the gap element 5d. Symbol L1 in Fig. 6 represents an initial gap between the impactor 1a and the reaction plate 1c shown in Fig. 3B. When a relative displacement becomes equal to L1 or more, the rigidity of inclination K allows the gap element 5d to generate force. On the other hand, for simplicity, the primary vibration system (the nuclear reactor building) 6 as a vibration control target is taken as a single-freedom-degree vibration system in the direction of arrow X. In addition, a primary vibration system mass 6a is joined to ground 8 by means of a ground spring 6b.

In the dynamic damper system configured as above, if the frequency of the vibration control target is defined as Fp [Hz], a spring constant Kd of the spring element 5b is preferably set as shown in the following expression (1). In such a case, it is needed only to select a material having the spring constant Kd which satisfies expression (1). Incidentally, symbol Md in expression (1) means the mass of the weight 5a.

The damping element 5c is preferably set such that the damping constant Cd satisfies the following expression (2). Incidentally, symbol h in expression (2) means a damping ratio depending on material properties. The relationship between the damping ratio h and a reflection coefficient e is set as in the following expression (3). For example, refer to a non-patent document: The 2007 Report on Test and Examination of Seismic Assessment Technology for Nuclear Facilities and Dynamic Up-Down Motion Earthquake Resistance Test, Japan Nuclear Energy Safety Organization, January 2009, Pages 212-213.

[Expression 1]

$$Kd = \left(2\pi \cdot Fp\right)^2 \cdot Md \qquad \dots \text{Expression (1)}$$

[Expression 2]

$$Cd = 2h\sqrt{Md \cdot Kd} \qquad \dots \text{Expression (2)}$$

[Expression 3]

$$e = \exp\left(-\frac{h\pi}{\sqrt{1-h^2}}\right) \qquad \dots \text{Expression (3)}$$

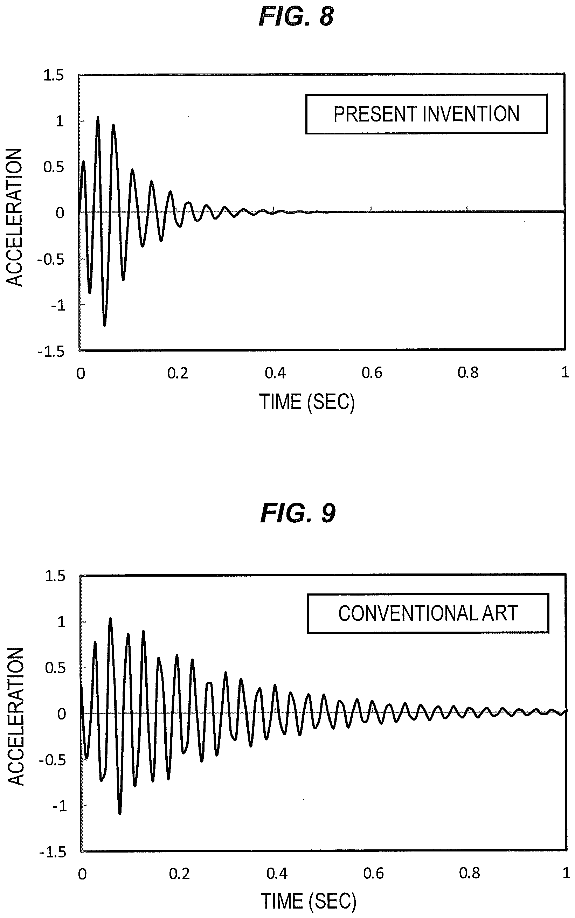

Fig. 7 is a graph showing an example of aircraft impact load curves. In Fig. 7, a horizontal axis represents time and a longitudinal axis represents an impact load made dimensionless with the maximum value set at 1. Fig. 8 shows an analysis result of acceleration encountered when the impact load F_shock shown in Fig. 7 is applied to the primary vibration system 6 to operate the dynamic damper 5 in the system shown in Fig. 5. In Fig. 8, a horizontal axis represents time and a longitudinal axis represents the acceleration of the primary vibration system mass 6a made dimensionless with the maximum value set at 1. On the other hand, Fig. 9 is a graph showing an analysis result of acceleration encountered when the impact load F_shock shown in Fig. 7 is applied to the primary vibration system, in a conventional system not provided with the higher-order vibration control device according to the present invention. As is clear from the comparison between the graphs in Figs. 8 and 9, the dynamic damper 5 according to the present invention is operated in the example of Fig. 8 to damp the higher-order vibration caused by the impact load more quickly than in the example of Fig. 9.

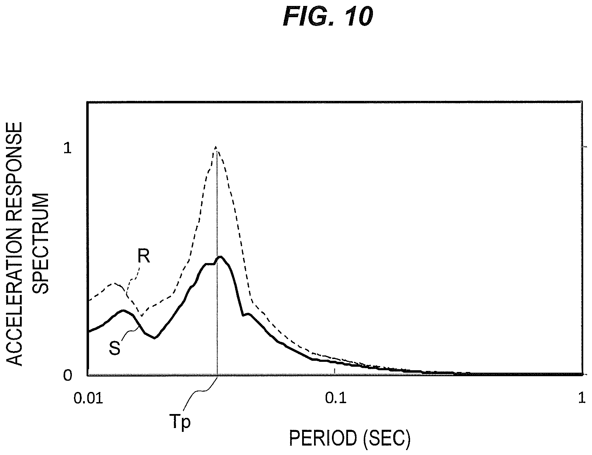

Fig. 10 illustrates a comparison in acceleration response spectrum between the absence and presence of the dynamic damper according to the present invention. In Fig. 10, a solid line R represents the case of "the presence" of the dynamic damper (in the case of the present invention), whereas a dotted line S represents the case of "the absence" of the dynamic damper (in the case of the conventional art). A horizontal line represents a period and a longitudinal line represents an acceleration response spectrum made dimensionless with the maximum value set at 1 in the case of the absence of the dynamic damper. As shown in Fig. 10, the present invention having the dynamic damper is such that a remarkable vibration suppression effect can be confirmed at the period Tp (= 1/Fp) of higher-order vibration which is a vibration control target.

If the higher-order vibration control device of the present embodiment described above is used, in the event that it is determined that it is possible for a flying object to impact the nuclear reactor building 3, the locking of the impactor 1a by the locking mechanism 2 is released. When an impact load is applied to the nuclear reactor building 3, the impactor 1a impacts the reaction plate 1c to dissipate vibration energy, whereby higher-order vibration can be suppressed. Thus, the higher-order vibration can be damped at stages where the impact load propagates to various devices housed in the reactor containment vessel wall 34.

In the present embodiment, the rolling of the impactor 1a is locked during normal times; therefore, the impactor 1a will not be rolled by the excitation force resulting from an earthquake. If the rolling of the impactor is permitted in the period of an earthquake, the various devices housed in the reactor containment vessel wall 34 is likely to cause a failure. However, the present embodiment releases the locking of the impactor 1a only at the time of the impact of an aircraft or the like. Thus, any damage to the devices due to the rolling of the impactor 1a can be prevented at the time of an earthquake. Further, it is possible to prevent the occurrence of noise resulting from the rolling of the impactor 1a at the time of an earthquake.

Incidentally, to confirm the implementation of the present embodiment, it is needed only to visually confirm whether or not the higher-order vibration control device having the impactor 1a, the housing 1b and the locking mechanism 2 is installed from above or below on the floor of the nuclear plant. Further, it is needed only to visually confirm whether or not a signal line or a wireless transceiver used to turn ON/OFF the locking mechanism is provided.

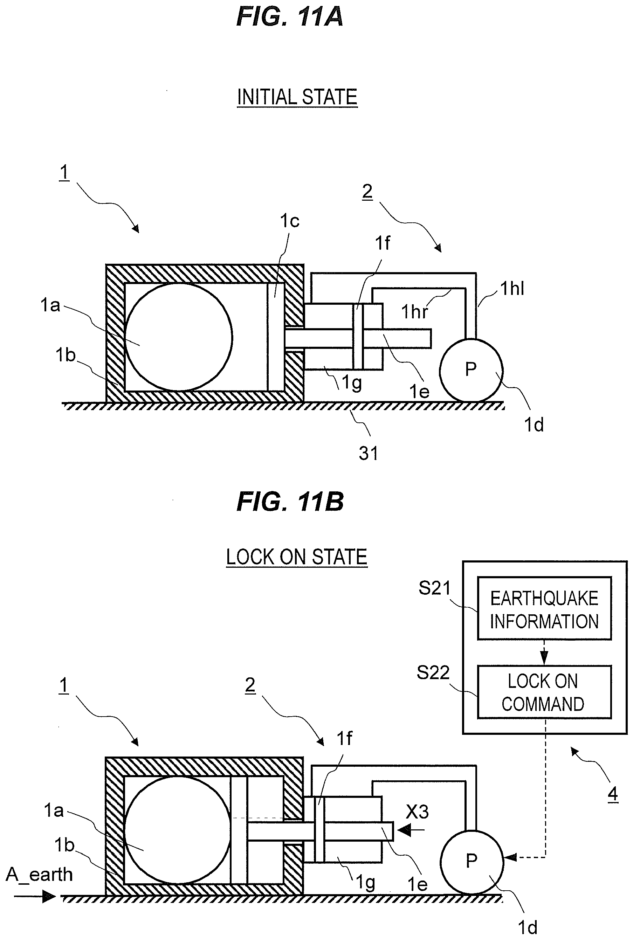

A second embodiment of the present invention is described with reference to Figs. 11A and 11B. Figs. 11A and 11B illustrate the schematic configuration and action of a higher-order vibration control device according to the second embodiment of the present invention.

The initial state of the higher-order vibration control device 1 in the present embodiment is as shown in Fig. 11A. In the initial state, a control unit 4 sends an OFF command to a hydraulic pump 1d to release the locking of an impactor 1a, so that the impactor 1a is brought into a state of being rolled.

As illustrated in Fig. 11B, if it is determined that seismic waves are likely to enter the nuclear reactor building 3 on the basis of earthquake information S21, the control unit 4 sends an ON command S22 to the hydraulic pump 1d. This causes the hydraulic pump 1d to increase the pressure in a pipe (R) 1hr to shift a piston If, a cylinder rod 1e and an reaction plate 1c in the direction of arrow X3 (leftward in Fig. 11B). In this way, the reaction plate 1c comes into contact with the impactor 1c to restrain the movement of the impactor 1a. Incidentally, for example, an emergency earthquake alert or information of a seismometer installed adjacently to the nuclear plant is preferably used as the earthquake information S21 according to the present embodiment.

According to the higher-order vibration control device 1 of the present embodiment configured as above, when a load A_earth caused by seismic waves is applied to the nuclear reactor building 3, the locking mechanism 2 is held in an ON state. Therefore, the impactor 1a can be prevented from being rolled in the housing 1b. Thus, it is possible to prevent the devices in the reactor containment vessel wall 34 from being damaged by the rolling of the impactor 1a at the time of an earthquake. Further, it is possible to prevent the occurrence of noise resulting from the rolling of the impactor 1a.

In particular, the impactor 1a can be rolled during normal times in the present embodiment. Therefore, there is a merit in which even if an unexpected higher-order vibration occurs including e.g. higher-order vibration caused by vapor generated in the reactor containment vessel due to LOCA (a loss-of-coolant accident), such a higher-order vibration can be suppressed.

Incidentally, to confirm the implementation of the present embodiment, it is needed only to visually confirm whether or not the higher-order vibration control device having the impactor 1a, the housing 1b and the locking mechanism 2 is installed from above or below on the floor of the nuclear plant. Further, it is needed only to visually confirm the fact that the impactor 1a is in the state of being able to be rolled during normal times.

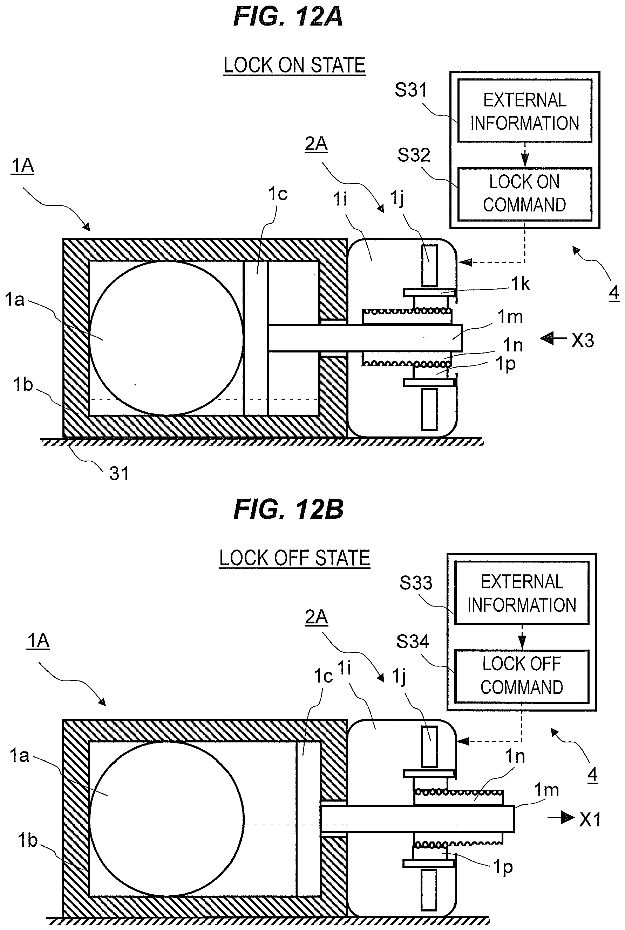

A third embodiment of the present invention is described with reference to Figs. 12A and 12B. Figs. 12A and 12B illustrate the schematic configuration and action of a higher-order vibration control device according to the third embodiment of the present invention. The higher-order vibration control device 1A illustrated in Figs. 12A and 12B has a locking mechanism 2A. The locking mechanism 2A includes a shaft 1m having a leading end to which a reaction plate 1c is attached; a ball screw In provided at a portion of the outer circumferential surface of the shaft 1m and having a spiral thread; a ball screw nut 1p screwed on the ball screw In; a rotor 1k secured to the outer circumference of the ball screw nut 1p; a stator 1j installed with a gap defined between the stator 1j and the outer circumference of the rotor 1k and generating electromagnetic force, thereby rotating the rotor 1k; and a locking mechanism housing 1i securing the stator 1j thereto.

Fig. 12A illustrates a state where the control unit 4 sends an ON command S32 to the locking mechanism 2A on the basis of external information S31. Upon receipt of the ON command S32, the stator 1j and the rotor 1k apply rotary torque to the ball screw nut 1p. The rotary torque is converted into the force of a linear-motion direction (the axial direction of the shaft 1m) via the ball screw In, thereby driving the shaft 1m and the reaction plate 1c in the direction of arrow X3 (leftward in Fig. 12A). As a result, the impactor 1a is held and locked between the housing 1b and the reaction plate 1c.

Fig. 12B illustrates a state where the control unit 4 sends an OFF command S34 to the locking mechanism 2A on the basis of external information S33. Upon receipt of the OFF command S34, the stator 1j and the rotor 1k apply to the ball screw nut 1p rotary torque in a direction opposite to that of the case of Fig. 12A. The rotary torque is converted into the force of the linear-motion direction via the ball screw In, thereby driving the shaft 1m and the reaction plate 1c in the direction of arrow X1 (rightward in Fig. 12B). As a result, the reaction plate 1c is moved away from the impactor 1a to release the locking of the impactor 1a.

The locking mechanism 2A of the electric drive system configured as above is used in the higher-order vibration control device 1A in place of the locking mechanism 2 of the hydraulic drive system shown in each of the above embodiments. Therefore, maintenance performance can be improved compared with that of the hydraulic drive system using hydraulic oil. Incidentally, the rotation-linear-motion conversion of the locking mechanism 2A may be achieved by the use of a rack-pinion mechanism or a trapezoidal thread. Such a case is effective for cost reduction although force conversion efficiency lowers.

Incidentally, to confirm the implementation of the present embodiment, it is needed only to visually confirm whether or not the higher-order vibration control device having the impactor, the housing and the locking mechanism is provided from above or below on the floor of the nuclear plant. Further, it is needed only to visually confirm whether or not an electric motor is used in a portion of the locking mechanism.

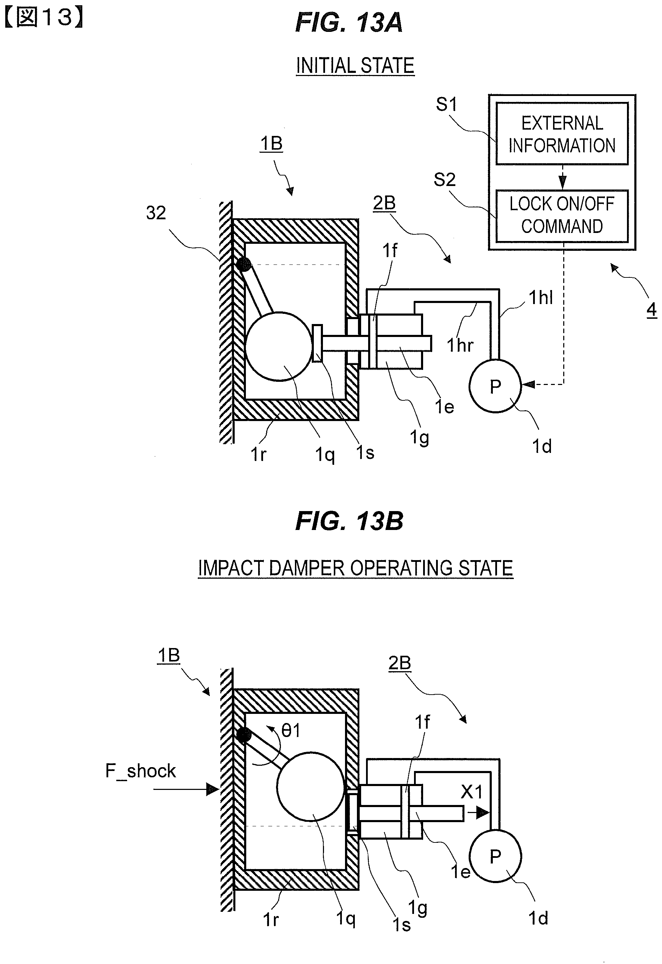

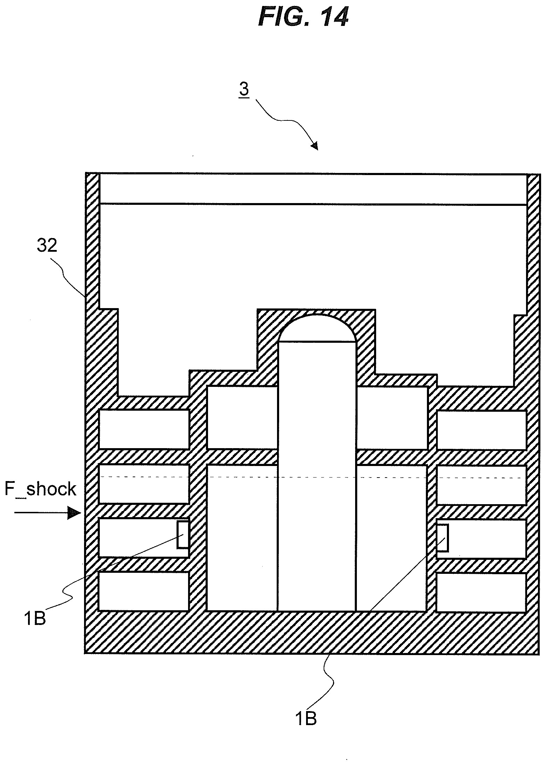

A fourth embodiment of the present invention is described with reference to Figs. 13A, 13B and 14. Figs. 13A and 13B illustrate the schematic configuration and action of a higher-order vibration control device according to the fourth embodiment of the present invention.

The higher-order vibration control device 1B illustrated in Fig. 13 is secured to the outer circumference of a reactor containment vessel wall 34. The higher-order vibration control device 1B internally has a hollow portion and includes a housing 1r secured to the reactor containment vessel wall 34; a pendulum-like impactor 1q which is housed in the housing 1r and which can be swung around a fulcrum point set in the hollow portion in the housing 1r; and a locking mechanism 2B, which are configured to constitute an impact damper. The locking mechanism 2B includes a hydraulic pump 1d, a hydraulic cylinder 1g and a reaction plate 1s. The reaction plate 1s is attached to the leading end of a rod 1e and moved toward or retreated from the impactor 1q.

Fig. 13A illustrates an initial state of the higher-order vibration control device 1B. In this case, the control unit 4 sends an ON command to the hydraulic pump 1d, so that hydraulic oil is supplied to the pipe (R) 1hr. Thus, the cylinder 1e is extended to bring the reaction plate 1s into contact with the impactor 1q. The impactor 1q is held in the state of being sandwiched between the internal wall of the housing 1r and the reaction plate 1s. In other words, the rolling of the impactor 1q is locked by the locking mechanism 2B.

As illustrated in Fig. 13B, if it is determined that it is possible for an aircraft to impact the nuclear reactor building 3 on the basis of aircraft impact prediction information, the control unit 4 sends the OFF command to the hydraulic pump 1d. Thus, the hydraulic pump 1d operates to supply the hydraulic oil to the pipe (L) 1hl to shift the piston If, the rod 1e and the reaction plate 1s in the direction of arrow X1 (rightward in Fig. 13B). This releases the locking of the impactor 1q, which brings the impactor 1q into a swingable state. Thus, as illustrated in Fig. 13B, if an impact load F_shock is applied to the nuclear reactor building 3 just as the aircraft impact prediction information, the impactor 1q is swung in a $\theta$1-direction and impacts the housing 1r to damp vibration energy caused by the impact load F_shock.

Fig. 14 is a schematic view of a nuclear reactor building 3 in which the higher-order vibration control devices 1B shown in Fig. 13 are disposed. It is here assumed that a flying object impacts an external wall 32 of the nuclear reactor building 3, so that a horizontal impact load F_shock is applied to the external wall 32. The higher-order vibration control devices 1B each having a pendulum-like impactor 1q are disposed on the outer circumferential surface of a reactor containment vessel wall 34. It is effective that a plurality of the higher-order vibration control devices 1 are mounted. However, it is preferred that the number of the higher-order vibration control devices 1 thus installed be set taking into account conditions such as the weight and impact velocity of a flying object assumed, the position of an impact floor, etc. Incidentally, the higher-order vibration control devices 1B may be mounted on the inner circumferential surface of the external wall 32. Further, although a damping effect is reduced compared with the case where the higher-order vibration control devices are mounted on the wall surface in the nuclear reactor building 3, they may be mounted on the upper surface and lower surface of a floor slab.

The use of the higher-order vibration control device 1B configured as above can reduce the force necessary to hold the locking of the impactor 1q in the ON state because the pendulum-like impactor 1q is automatically returned to a static position by gravity. Thus, the size of the hydraulic pump 1d can be reduced, which is effective for cost reduction.

Incidentally, to confirm the implementation of the present embodiment, it is needed only to visually confirm whether or not the higher-order vibration control device having the pendulum-like impactor, the housing and the locking mechanism is provided on the internal wall of the nuclear plant.

Incidentally, the present invention is not limited to the above embodiments but includes various modified examples within a range not departing from the gist thereof. For example, the present invention is not limited to the higher-order vibration control devices which have all the configurations described in the above embodiments. The present invention includes higher-order vibration control devices whose configurations are partially omitted. Additionally, the configurations of a certain embodiment can partially be added to or replaced with those of the other embodiments.

Incidentally, the above embodiments describe the case where the higher-order vibration control devices are mounted in the nuclear reactor building of the nuclear plant. However, it goes without saying that the higher-order vibration control devices according to the present invention can produce the same effect as in the case of being installed in other large-scale constructions.

**Claims**

1. A higher-order vibration control device (i) comprising:

   a housing (1b) secured to a large-scale construction;
   an impactor (1a) housed movably in the housing (1b); and
   a locking mechanism (2) capable of selectively switching between release and restraint of movement of the impactor (1a) in the housing (1b), wherein
   the locking mechanism (2) is configured to release movement of the impactor (1a) in an event that a flying object may possibly impact the large-scale construction, **characterized in that**
   the locking mechanism (2) includes a hydraulic pump (1d); a pair of pipes (1hr, 1hl) through which hydraulic oil supplied from the hydraulic pump (1d) flows; a cylinder (1g) connected to the pipes (1hr, 1hl); a piston (1f) configured to slide in the cylinder (1g); a cylinder rod (1e) attached to the piston (If); and a reaction plate (1c) which is attached to the cylinder rod (1e) and configured to move back and forth against the impactor (1a); or
   the locking mechanism (2; 2A) includes a shaft (1m); a reaction plate (1c) which is attached to the shaft (1m) and configured to move back and forth against the impactor (1a); a ball screw (1n) provided on an outer circumferential surface of the shaft (1m); a ball screw nut (1p) screwed to the ball screw (1n); a rotor (1k) secured to an outer circumference of the ball screw nut (1p); and a stator (1j) which is installed in a gap defined between the stator (1j) and an outer circumference of the rotor (1k) and configured to generate electromagnetic force to thereby rotating the rotor (1k).

2. The higher-order vibration control device (1) according to claim 1, wherein
   the locking mechanism (2) is configured to restrain movement of the impactor (1a) in case of the occurrence of an earthquake or releases movement of the impactor (1a) in other cases.

3. The higher-order vibration control device (1; 1B) according to claim 1, wherein
   the impactor (1a; 1q) is a pendulum capable of swinging in the housing (1b; 1r).

4. The higher-order vibration control device (1; 1B) according to claim 3, wherein
   the locking mechanism (2; 2B) is configured to release movement of the impactor (1a; 1q) in an event that a flying object may possibly impact the large-scale construction.

5. The higher-order vibration control device (1; 1B) according to claim 3, wherein
   the locking mechanism (2; 2B) is configured to restrain movement of the impactor (1a; 1q) in case of an occurrence of an earthquake and releases movement of the impactor (1a; 1q) in other cases.

6. A large-scale construction comprising:

   a housing (1b) secured to a floor (31), a ceiling or a wall of the large-scale construction;
   an impactor (1a) housed movably in the housing (1b); and
   a locking mechanism (2) capable of selectively switching between release and restraint of movement of the impactor (1a) in the housing (1b), wherein
   the large-scale construction is a nuclear plant having a reactor containment vessel and a nuclear reactor building (3), and
   the locking mechanism (2) is configured to release movement of the impactor (1a) in an event that a flying object may possibly impact the nuclear plant, **characterized in that**
   the locking mechanism (2) includes a hydraulic pump (1d); a pair of pipes (1hr, 1hl) through which hydraulic oil supplied from the hydraulic pump (1d) flows; a cylinder (1g) connected to the pipes (1hr, 1hl); a piston (1f) configured to slide in the cylinder (1g); a cylinder rod (1e) attached to the piston (1f); and a reaction plate (1c) which is attached to the cylinder rod (1e) and configured to move back and forth against the impactor (1a); or

the locking mechanism (2; 2A) includes a shaft (1m) ; a reaction plate (1c) which is attached to the shaft (1m) and configured to move back and forth against the impactor (1a); a ball screw (1n) provided on an outer circumferential surface of the shaft (1m); a ball screw nut (1p) screwed to the ball screw (1n); a rotor (1k) secured to an outer circumference of the ball screw nut (1p) ; and a stator (1j) which is installed in a gap defined between the stator (1j) and an outer circumference of the rotor (1k) and configured to generate electromagnetic force to thereby rotating the rotor (1k).

7. The large-scale construction according to claim 6, wherein
the locking mechanism (2) is configured to restrain movement of the impactor (1a) in case of an occurrence of an earthquake and releases movement of the impactor (1a) in other cases.

8. The large-scale construction according to claim 6, wherein
the impactor (1a; 1q) is a pendulum capable of swinging in the housing (1b; 1r).

9. The large-scale construction according to claim 6, wherein
the housing (1b; 1r) is secured to an internal wall in the nuclear plant.

10. The large-scale construction according to claim 6, wherein
the locking mechanism (2; 2B) is configured to restrain movement of the impactor (1a; 1q) in case of an occurrence of an earthquake and releases movement of the impactor (1a; 1q) in other cases.

11. A higher-order vibration control method for a large-scale construction according to at least one of the claims 6-10, comprising the steps of:

releasing movement of the impactor (1a) in the housing (1b) in an event that a flying object may possibly to impact the large-scale construction; and
restraining movement of the impactor (1a) in other cases.


**Patentansprüche**

1. Steuervorrichtung für Schwingungen höherer Ordnung, umfassend:

- ein Gehäuse (1b), das an einer Großkonstruktion angebracht ist;
- ein Schlagkörper (1a), der beweglich im Gehäuse (1b) vorgesehen ist; und
- einen Verriegelungsmechanismus (2), der selektiv zwischen dem Lösen und dem Zurückhalten der Bewegung des Schlagkörpers (1a) im Gehäuse (1b) umschalten kann, wobei der Verriegelungsmechanismus (2) dazu eingerichtet ist, die Bewegung des Schlagkörpers (1a) bei einem Ereignis freizugeben, in dem ein Flugobjekt möglicherweise auf die Großkonstruktion aufprallen kann,

**dadurch gekennzeichnet, dass** der Verriegelungsmechanismus (2) eine Hydraulikpumpe (1d), ein Paar Rohre (1hr, 1hl), durch die das von der Hydraulikpumpe (1d) zugeführte Hydrauliköl strömt; einen Zylinder (1g), der mit den Rohren (1h, 1hl) verbunden ist; einen Kolben (1f), der dazu eingerichtet ist, in dem Zylinder (1g) zu gleiten; eine Zylinderstange (1e), die an dem Kolben (1f) angebracht ist; und eine Reaktionsplatte (1c) umfasst, die an der Zylinderstange (1e) angebracht und dazu eirfgerichtet ist, sich gegen den Schlagkörper (1a) hin und zurück zu bewegen; oder
der Verriegelungsmechanismus (2; 2A) eine Welle (1m), eine Reaktionsplatte (1c), die an der Welle (1m) angebracht und dazu eingerichtet ist, sich gegen den Schlagkörper (1a) hin und zurück zu bewegen; eine Kugelumlaufspindel (1n), die auf einer äußeren Umfangsfläche der Welle (1m) vorgesehen ist; eine Kugelumlaufmutter (1p), die mit der Kugelumlaufspindel (1n) verbunden ist; einen Rotor (1k), der an einem Außenumfang der Kugelumlaufmutter (1p) angebracht ist; und einen Stator (1j) umfasst der mit einem Spalt zwischen dem Stator (1j) und einem Außenumfang des Rotors (1k) eingebaut ist und dazu eingerichtet ist, elektromagnetische Kraft zu erzeugen und dadurch den Rotor (1k) zu drehen.

2. Steuervorrichtung für Schwingungen höherer Ordnung nach Anspruch 1, wobei der Verriegelungsmechanismus (2) dazu eingerichtet ist, die Bewegung des Schlagkörpers (1a) im Falle des Auftretens eines Erdbebens einzuschränken oder die Bewegung des Schlagkörpers (1a) in anderen Fällen freizugeben.

3. Steuervorrichtung für Schwingungen höherer Ordnung nach Anspruch 1, wobei der Schlagkörper (1a; 1q) ein im Gehäuse (1b; 1r) schwingfähiges Pendel ist.

4. Steuervorrichtung für Schwingungen höherer Ordnung nach Anspruch 3, wobei der Verriegelungsmechanismus (2; 2B) dazu eingerichtet ist, die Bewegung des Schlagkörpers (1a; 1q) freizugeben, falls ein Flugobjekt möglicherweise die Großkonstruktion beeinträchtigen kann.

5. Steuervorrichtung für Schwingungen höherer Ordnung nach Anspruch 3, wobei der Verriegelungsmechanismus (2; 213) dazu eingerichtet ist, die Bewegung des Schlagkörpers (1a; 1q) beim Auftreten eines Erdbebens einzuschränken und in anderen Fällen die Bewegung des Schlagkörpers (1a; 1q) freizugeben.

6. Großkonstruktion, umfassend:

   - ein Gehäuse (1b), das an einem Boden (31), einer Decke oder einer Wand der Großkonstruktion angebracht ist;
   - einen Schlagkörper (1a), der beweglich in dem Gehäuse (1b) untergebracht ist; und
   - einen Verriegelungsmechanismus (2), der dazu eingerichtet ist, selektiv zwischen dem Lösen und der Einschränkung der Bewegung des Schlagkörpers (1a) im Gehäuse (1b) zu wechseln, wobei

   die Großkonstruktion eine Kernkraftanlage mit einem Reaktorsicherheitsbehälter und einem Kernreaktorgebäude (3) ist, und
   der Verriegelungsmechanismus (2) dazu eingerichtet ist, die Bewegung des Schlagkörpers (1a) bei einem Ereignis freizugeben, in dem ein Flugobjekt möglicherweise auf die Kernkraftanlage aufprallen kann,
   **dadurch gekennzeichnet, dass** der Verriegelungsmechanismus (2) eine Hydraulikpumpe (1d); ein Paar Rohre (1hr, 1hl), durch die das von der Hydraulikpumpe (1d) zugeführte Hydrauliköl strömt; einen Zylinder (1g), der mit den Rohren (1hr, 1hl) verbunden ist; einen Kolben (1f), der dazu eingerichtet ist, in dem Zylinder (1g) zu gleiten; eine Zylinderstange (1e), die an dem Kolben (1f) angebracht ist; und eine Reaktionsplatte (1c) umfasst, die an der Zylinderstange (1e) angebracht und dazu eingerichtet ist, sich gegen den Schlagkörper (1a) hin und zurück zu bewegen; oder
   der Verriegelungsmechanismus (2; 2A) eine Welle (1m), eine Reaktionsplatte (1c), die an der Welle (1m) angebracht und dazu eingerichtet ist, sich gegen den Schlagkörper (1a) hin und zurück zu bewegen; eine Kugelumlaufspindel (1n), die auf einer äußeren Umfangsfläche der Welle (1m) vorgesehen ist; eine Kugelumlaufmutter (1p), die mit der Kugelumlaufspindel (1n) verbunden ist; einen Rotor (1k), der an einem Außenumfang der Kugelumlaufmutter (1p) angebracht ist; und einen Stator (1j) umfasst, der mit einem Spalt zwischen dem Stator (1j) und einem Außenumfang des Rotors (1k) eingebaut ist und dazu eingerichtet ist, elektromagnetische Kraft zu erzeugen und dadurch den Rotor (1k) zu drehen.

7. Großkonstruktion nach Anspruch 6, wobei der Verriegelungsmechanismus (2) dazu eingerichtet ist, die Bewegung des Schlagkörpers (1a) im Falle eines Erdbebens einzuschränken und in anderen Fällen die Bewegung des Schlagkörpers (1a) freizugeben.

8. Großkonstruktion nach Anspruch 6, wobei der Schlagkörper (1a; 1q) ein im Gehäuse (1b; 1r) schwingfähiges Pendel ist.

9. Großkonstruktion nach Anspruch 6, wobei das Gehäuse (1b; 1r) an einer inneren Wand im Kernkraftwerk befestigt ist.

10. Großkonstruktion nach Anspruch 6, wobei der Verriegelungsmechanismus (2; 2B) dazu eingerichtet ist, die Bewegung des Schlagkörpers (1a; 1q) im Falle eines Erdbebens einzuschränken und in anderen Fällen die Bewegung des Schlagkörpers (1a; 1q) freizugeben.

11. Verfahren zur Dämpfung von Schwingungen höherer Ordnung für eine Großkonstruktion nach mindestens einem der Ansprüche 6 bis 10, umfassend die Schritte:

   - Freigeben der Bewegung des Schlagkörpers (1a) in dem Gehäuse (1b) bei einem Ereignis, in dem ein Flugobjekt möglicherweise auf die Großkonstruktion aufprallen kann; und
   - Zurückhalten der Bewegung des Schlagkörpers (1a) in anderen Fällen.

**Revendications**

1. Dispositif de commande de vibrations d'ordre supérieur (1) comprenant :

   un boîtier (1b) fixé sur une construction de grande dimension ;
   un dispositif à impact (1a) logé de façon déplaçable dans le boîtier (1b) ; et
   un mécanisme de blocage (2) capable de commuter sélectivement entre une libération et une restriction du déplacement du dispositif à impact (1a) dans le boîtier (1b), dans lequel
   le mécanisme de blocage (2) est configuré pour libérer un déplacement du dispositif impact (1a) lors d'un événement selon lequel un objet volant peut éventuellement venir en impact contre la construction de grande dimension,
   **caractérisé en ce que**
   le mécanisme de blocage (2) inclut une pompe hydraulique (1d) ; une paire de tubes (1hr, 1hl) via lesquels de l'huile hydraulique alimentée depuis la pompe hydraulique (d) s'écoule ; un vérin (g) connecté aux tubes (1hr, 1hl) ; un piston (1f) configuré pour coulisser dans le vérin (1j) ; une tige de vérin (1e) attachée au piston (1f) ; et une plaque de réaction (1c) qui est attachée à la tige de vérin (1e) et qui est configurée pour se déplacer en va-et-vient à l'encontre du dispositif impact (1a), ou
   le mécanisme de blocage (2 ; 2A) inclut un arbre (1m) ; une plaque de réaction (1c) qui est attachée à l'arbre (1m) et qui est configurée pour se déplacer en va-et-vient à l'encontre du dispositif à impact (1a) ; une vis à recirculation de billes (1n) prévue sur une surface circonférentielle extérieure de l'arbre (1m) ; un écrou de vis à recirculation de billes (1p) vissé sur la vis à recirculation de billes (1n) ; un rotor (1k) fixé sur une circonférence extérieure de l'écrou de vis à recirculation de billes (1p) ; et un stator (1j) qui est installé avec* un intervalle défini entre le stator (1j) et une circonférence extérieure du rotor (1k) et configuré pour générer une force électromagnétique pour mettre ainsi en rotation le rotor (1k).

2. Dispositif de commande de vibrations d'ordre supérieur (1) selon la revendication 1, dans lequel
   le mécanisme de blocage et (2) est configuré pour restreindre un déplacement du dispositif impact (1a) dans le cas où surviendrait un tremblement de terre ou pour libérer le déplacement du dispositif à impact (1a) dans d'autres cas.

3. Dispositif de commande de vibrations d'ordre supérieur (1 ; 1B) selon la revendication 1, dans lequel
   le dispositif à impact (1a ; 1q) est un pendule capable d'osciller dans le boîtier (1b ; 1r).

4. Dispositif de commande de vibrations d'ordre supérieur (1 ; 1B) selon la revendication 3, dans lequel
   le mécanisme de blocage (2 ; 2B) et configuré pour libérer le déplacement du dispositif impact (1a ; 1q) dans un cas où un objet volant peut éventuellement venir en impact contre la construction de grande dimension.

5. Dispositif de commande de vibrations d'ordre supérieur (1 ; 1B) selon la revendication 3, dans lequel
   le mécanisme de blocage (2 ; 2B) est configuré pour restreindre un déplacement du dispositif à impact (1a ; 1q) dans le cas où surviendrait un tremblement de terre et pour libérer le déplacement du dispositif à impact (1a ; 1q) dans d'autres cas.

6. Construction de grande dimension comprenant :

   un boîtier (1b) fixé sur un plancher (31), un plafond ou un mur de la construction de grande dimension ;
   un dispositif à impact (1a) logé de façon déplaçable dans le boîtier (1b) ; et
   un mécanisme de blocage (2) capable de commuter sélectivement entre une libération et une restriction du déplacement du dispositif à impact (1a) dans le boîtier (1b), dans laquelle
   la construction de grande dimension est une centrale nucléaire ayant une enceinte de confinement de réacteur et un bâtiment de réacteur nucléaire (3), et
   le mécanisme de blocage (2) est configuré pour libérer un déplacement du dispositif à impact (1a) dans un cas où un objet volant pourrait éventuellement venir en impact contre la centrale nucléaire,
   **caractérisée en ce que**
   le mécanisme de blocage (2) inclut une pompe hydraulique (1b) ; une paire de tubes (1hr, 1hl) via lesquels de l'huile hydraulique alimentée depuis la pompe hydraulique (1d) s'écoule ; un vérin (1g) connecté aux tubes (1hr, 1hl) ; un piston (1f) configuré pour coulisser dans le vérin (1j) ; une tige de vérin (1e) attachée au piston (1f) ; et une plaque de réaction (1c) qui est attachée à la tige de vérin (1e) et qui est configurée pour se déplacer en va-et-vient à l'encontre du dispositif impact (1a) ; ou
   le mécanisme de blocage (2 ; 2A) inclut un arbre (1m) ; une plaque de réaction (1c) qui est attachée à l'arbre (1m) et qui est configurée pour se déplacer en va-et-vient à l'encontre du dispositif à impact (1a) ; une vis à recirculation de billes (1n) prévue sur une surface circonférentielle extérieure de l'arbre (1m) ; et un écrou de vis à recirculation de billes (1p) vissé sur la vis à recirculation de billes (1n) ; un rotor (1k) fixé sur une circonférence extérieure de l'écrou de vis à recirculation de billes (1p) ; et un stator (1j) qui est installé avec* un intervalle défini entre le stator (1j) et une circonférence extérieure du rotor (1k) et qui est configuré pour générer une force électromagnétique pour mettre ainsi en rotation le rotor (1k).

7. Construction de grande dimension selon la revendication 6, dans laquelle
le mécanisme de blocage (2) est configuré pour restreindre un déplacement du dispositif à impact (1a) dans le cas où surviendrait un tremblement de terre et pour libérer le déplacement du dispositif à impact (1a) dans d'autres cas.

8. Construction de grande dimension selon la revendication 6, dans laquelle
le dispositif à impact (1a ; 1q) est un pendule capable d'osciller dans le boîtier (1b ; 1r).

9. Construction de grande dimension selon la revendication 6, dans laquelle
le boîtier (1b ; 1r) est fixé sur un mur intérieur dans la centrale nucléaire.

10. Construction de grande dimension selon la revendication 6, dans laquelle
le mécanisme de blocage (2 ; 2B) est configuré pour restreindre un déplacement du dispositif à impact (1a ; 1q) dans le cas où surviendrait un tremblement de terre et pour libérer le déplacement du dispositif à impact (1a ; 1q) dans d'autres cas.

11. Procédé de commande de vibrations d'ordre supérieur pour une construction de grande dimension selon l'une au moins des revendications 6 à 10, comprenant les étapes consistant à :

libérer le déplacement du dispositif à impact (1a) dans le boîtier (1b) dans le cas où un objet volant pourrait éventuellement venir en impact contre la construction de grande dimension ; et
restreindre le mouvement du dispositif à impact (1a) dans d'autres cas.

# FIG. 1

## FIG. 2

# FIG. 3A

## INITIAL STATE

# FIG. 3B

## LOCK OFF STATE

## FIG. 3C

### IMPACT DAMPER OPERATING STATE

## FIG. 4

## FIG. 5

*FIG. 6*

*FIG. 7*

## FIG. 8

## FIG. 9

FIG. 10

# FIG. 11A

## INITIAL STATE

# FIG. 11B

## LOCK ON STATE

## FIG. 12A

LOCK ON STATE

## FIG. 12B

LOCK OFF STATE

【図13】

# FIG. 13A

INITIAL STATE

# FIG. 13B

IMPACT DAMPER OPERATING STATE

## FIG. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2007297854 A
- JP 2003240047 A
- EP 0587891 A1
- JP 2009155801 A
- JP 2004293669 A

### Non-patent literature cited in the description

- **SHIBATA ; AKINORI.** The latest earthquake-resistant structure analysis. Morikita Publishing Co., Ltd, 15 May 2003, 45-50
- The 2007 Report on Test and Examination of Seismic Assessment Technology for Nuclear Facilities and Dynamic Up-Down Motion Earthquake Resistance Test. *Japan Nuclear Energy Safety Organization,* January 2009, 212-213